Europäisches Patentamt

European Patent Office

Office européen des brevets

(19)

(11) EP 0 898 359 A2

(12) **EUROPÄISCHE PATENTANMELDUNG**

(43) Veröffentlichungstag:
24.02.1999 Patentblatt 1999/08

(51) Int Cl.⁶: **H02M 7/48**

(21) Anmeldenummer: 98810736.3

(22) Anmeldetag: 30.07.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **22.08.1997 DE 19736613**

(71) Anmelder: **Asea Brown Boveri AG
5401 Baden (CH)**

(72) Erfinder:
• **Dähler, Peter
5236 Remigen (CH)**

• **Gaupp, Osvin
5400 Baden (CH)**
• **Linhofer, Gerhard
5405 Baden-Dättwil (CH)**
• **Ravot, Jean-François
01170 Chevry (FR)**

(74) Vertreter: **Lück, Gert, Dr. et al
Asea Brown Boveri AG
Immaterialgüterrecht(TEI)
Haselstrasse 16/699 I
5401 Baden (CH)**

(54) **Wechselrichter**

(57) Ein Wechselrichter (15) umfasst eine Mehrzahl von parallel arbeitenden Wechselrichterbrücken (B1,.., B8), deren Ausgangsspannungen über einen Transformator (19) aufsummiert werden, welcher eine der Anzahl der Wechselrichterbrücken (B1,..,B8) entsprechende Anzahl von Primärwicklungen (P1,..,P8) und zugehörigen Sekundärwicklungen (S1,..,S8) aufweist, wobei jede Wechselrichterbrücke (B1,..,B8) jeweils ausgangsseitig an eine Primärwicklung (P1,..,P8) angeschlossen ist, und die Sekundärwicklungen (S1,..,S8) zur Summation der Ausgangsspannungen in Serie geschaltet sind. Der Transformator (19) weist einen Mittelabgriff (23) auf, welcher über eine Erdverbindung (24) geerdet ist.

Bei einem solchen Wechselrichter wird eine Dämpfung bzw. Unterdrückung von über die Erdverbindung (24) fliessenden gleichphasigen bzw. Gleichtakt-Störströmen und den damit verbundenen Störspannungen dadurch erreicht, dass innerhalb des Transformators (19) die Sekundärwicklungen jeweils in eine erste und zweite gleichartige Teil-Sekundärwicklung (S11, S12 bzw. S21, S22 ....bzw. S81, S82) aufgeteilt sind, und die Teil-Sekundärwicklungen (S11,..,S82) so untereinander und mit dem Mittelabgriff (23) verbunden sind, dass sich die in den Teil-Sekundärwicklungen (S11,..,S82) induzierten Gleichtaktströme bzw. -spannungen gegenseitig aufheben.

Fig. 9

**Beschreibung**

TECHNISCHES GEBIET

Die vorliegende Erfindung bezieht sich auf das Gebiet der Leistungselektronik. Sie betrifft einen Wechselrichter, umfassend eine Mehrzahl von aus der selben Gleichspannungsquelle parallel arbeitenden Wechselrichterbrücken, deren Ausgangsspannungen über einen Transformator aufsummiert werden, welcher eine der Anzahl der Wechselrichterbrücken entsprechende Anzahl von Primärwicklungen und zugehörigen Sekundärwicklungen aufweist, wobei jede Wechselrichterbrücke jeweils ausgangsseitig an eine Primärwicklung angeschlossen ist, und die Sekundärwicklungen zur Summation der Ausgangsspannungen in Serie geschaltet sind, und wobei die Wechselrichterbrücken jeweils nach Massgabe einer Hilfssteuerspannung pulsdauermoduliert angesteuert werden und die Hilfssteuerspannungen der einzelnen Wechselrichterbrücken untereinander eine konstante Phasendifferenz aufweisen, und wobei der Transformator einen Mittelabgriff aufweist, welcher über eine Erdverbindung geerdet ist.

STAND DER TECHNIK

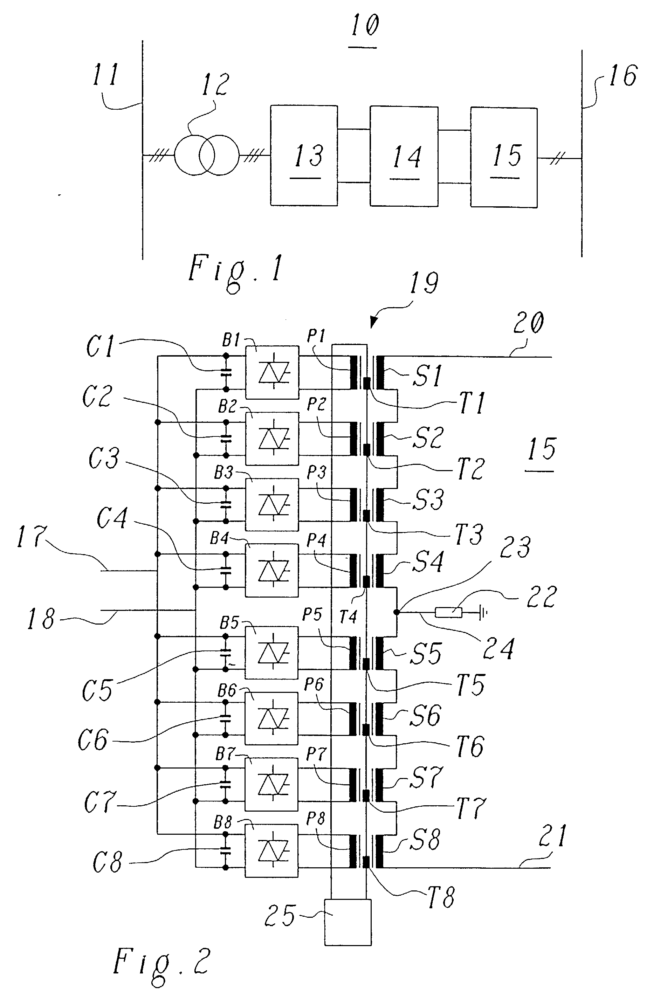

Zur Verbindung von Stromnetzen mit unterschiedlicher Phasenzahl und/oder Wechselspannungsfrequenz, wie z.B. zwischen einem 50Hz-Drehstromnetz und einem einphasigen 16 2/3Hz-Bahnnetz, werden zunehmend mit Leistungshalbleitern ausgerüstete vollstatische Kupplungen bzw. Bahnstromumrichter eingesetzt, die häufig als Umrichter mit Gleichspannungszwischenkreis ausgebildet sind. Gemäss Fig. 1 umfasst ein solcher Bahnstromumrichter 10 beispielsweise einen (thyristorbestückten) Stromrichter 13, der über einen Transformator 12 den Drehstrom aus dem Drehstromnetz 11 abnimmt und in einen Gleichstrom umwandelt, einen Gleichspannungszwischenkreis 14 zur Glättung bzw. Zwischenspeicherung, und einen Wechselrichter 15, der den Gleichstrom wieder in einen Wechselstrom der gewünschten Frequenz umwandelt und in das Bahnnetz 16 einspeist.

Im Wechselrichter 15 werden üblicherweise eine oder mehrere parallel arbeitende Wechselrichterbrücken mit schaltbaren Ventilen (z.B. GTOs) eingesetzt, die pulsdauermoduliert angesteuert werden und die gewünschte sinusförmige Ausgangsspannung durch eine Abfolge von dauermodulierten Rechteckimpulsen wechselnder Polarität approximieren. Zur Pulsdauermodulation wird dabei üblicherweise eine dreieckförmige Hilfssteuerspannung verwendet. Einzelheiten der Ansteuerung können beispielsweise einem Sonderdruck (Nr. 9608-1000-0) der Anmelderin, "Vollstatische 100-MW-Frequenzkupplung Bremen", entnommen werden. Werden mehrere Wechselrichterbrücken parallel betrieben, werden die Ausgangsspannungen aufsummiert. Eine Verringerung des Oberschwingungsgehalts wird dabei dadurch erreicht, dass die Ansteuerung der einzelnen Wechselrichterbrücken über die Hilfssteuerspannungen phasenverschoben erfolgt.

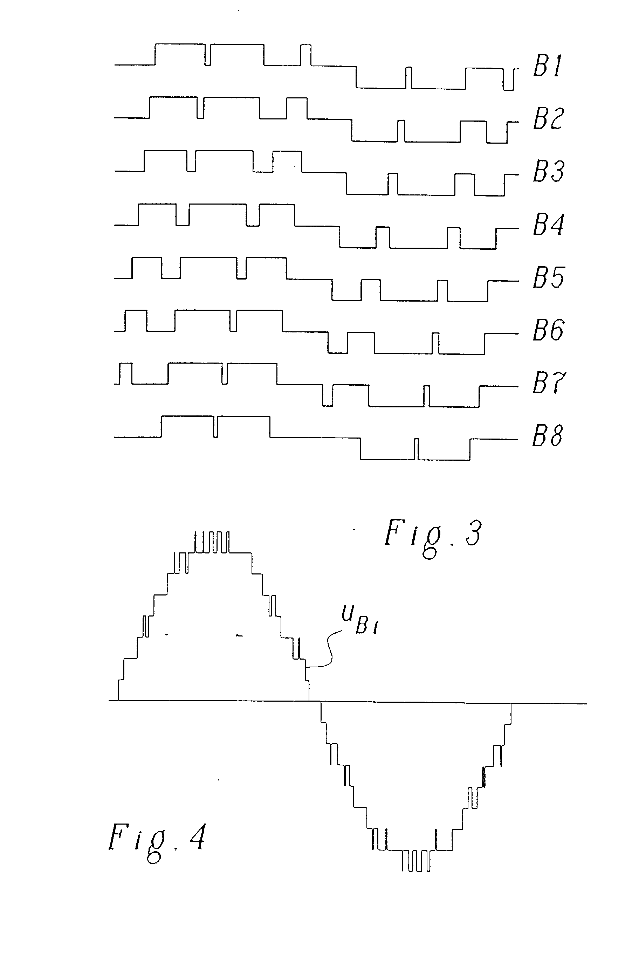

Ein beispielhafter Aufbau eines Wechselrichters 15 ist in Fig. 2 wiedergegeben. Der Wechselrichter 15 dieses Beispiels umfasst 8 parallel arbeitende Wechselrichterbrücken B1,..,B8, die jeweils mit einem parallelen Kondensator C1,..,C8 am Eingang an die vom Gleichspannungszwischenkreis 14 kommenden Eingangsleitungen 17, 18 angeschlossen sind. Zur Summation der Ausgangsspannungen der Wechselrichterbrücken B1,..,B8 ist ein Transformator 19 vorgesehen, der für jede der Wechselrichterbrücken B1,..,B8 ein Wicklungspaar aus einer Primärwicklung P1,..,P8 und einer Sekundärwicklung S1,..,S8 enthält. Die Ausgänge der Wechselrichterbrücken B1,..,B8 sind jeweils an die entsprechenden Primärwicklungen P1,..,P8 angeschlossen, die Sekundärwicklungen S1,..,S8 sind in Reihe geschaltet. Das summierte Ausgangssignal steht an den Ausgangsleitungen 20, 21 zur Verfügung. Zur Unterdrückung von Oberschwingungen kann der Transformator 19 zusätzlich mit Tertiärwicklungen T1,..,T8 ausgestattet sein, die in Reihe geschaltet und durch eine entsprechende Filterschaltung 25 bedämpft sind (siehe dazu beispielsweise die EP-B1-0 149 169). Beispielhafte dauermodulierte und phasenverschobene Impulsreihen für die Wechselrichterbrücken B1,..,B8 sind in Fig. 3 wiedergegeben. Durch Summation der einzelnen Impulsfolgen im Transformator 19 ergibt sich daraus die resultierende Summenspannung $u_{Bi}$ in Fig. 4.

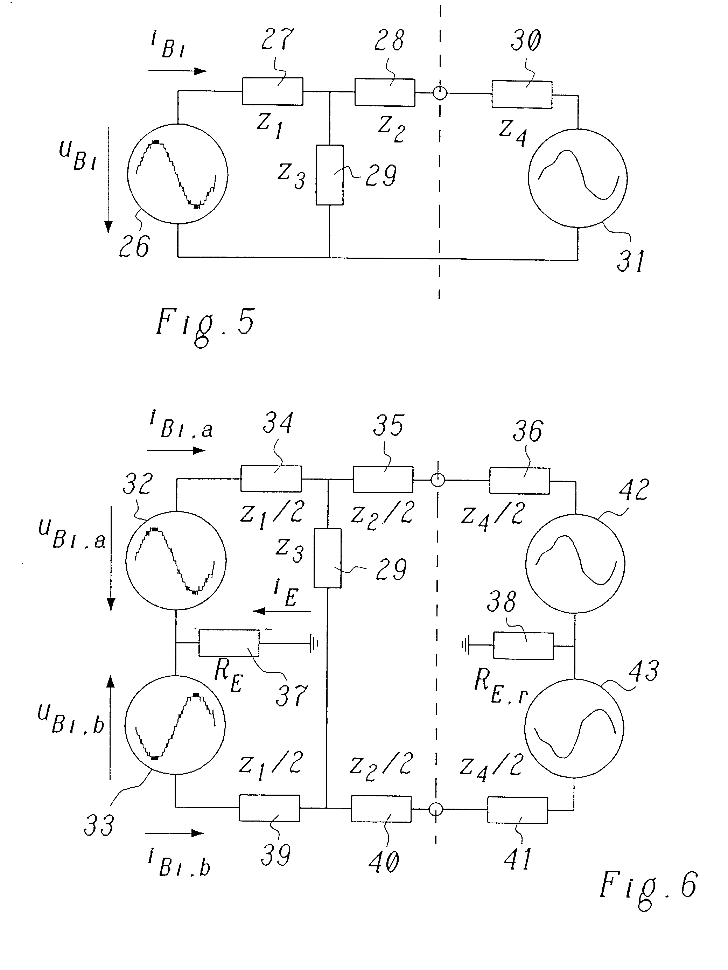

Probleme mit der in Fig. 2 dargestellten Art von Wechselrichter ergeben sich nun, wenn - wie es bei manchen Bahnnetzen erforderlich ist - der Transformator 19 des Wechselrichters 15 an einem Mittelabgriff 23 durch eine Erdverbindung 24 über einen Widerstand 22 (oder auch ohne Widerstand, d.h. "hart") geerdet wird (siehe Fig. 2). Diese Probleme lassen sich anhand der in Fig. 5 bis 8 wiedergegebenen Ersatzschaltbilder verdeutlichen: Der Wechselrichter, der als Spannungsquellenumrichter (<u>V</u>oltage <u>S</u>ource <u>C</u>onverter, VSC) arbeitet, kann grundsätzlich (Fig. 5) durch eine Spannungsquelle 26 mit der Spannung $u_{Bi}$ beschrieben werden, die einen entsprechenden Strom $i_{Bi}$ durch einen Kreis treibt, der durch die Impedanzen 27, 28 und 29 gebildet wird. Die Impedanzen 27 und 28 mit den Werten $z_1$ bzw. $z_2$ repräsentieren den Transformator 19, die Impedanz 29 mit dem Wert $z_3$ repräsentiert die Filterschaltung 25. Das Bahnnetz 16 lässt sich im Ersatzschaltbild durch die Impedanz 30 ($z_4$) und die Spannungsquelle 31 beschreiben.

Durch die Erdung (über den Widerstand 22) am Mittelabgriff 23 des Transformators 19 kann das Ersatzschaltbild des VSC aus Fig. 5 in ein Ersatzschaltbild gemäss Fig. 6 überführt werden. Die Spannungsquelle 26 ist hier in zwei Spannungsquellen 32 und 33 mit den Teilspannungen $u_{Bi,a}$ und $u_{Bi,b}$ aufgeteilt, wobei gilt:

$$(1) \qquad u_{Bi} = U_{Bi,a} - U_{Bi,b}$$

Die Impedanzen 27 und 28 des Transformators 19 sind in Fig. 6 nun aufgeteilt in Impedanzen 34 und 39 bzw. 35 und 40 mit jeweils der Hälfte des ursprünglichen Impedanzwertes, nämlich $z_1/2$ und $z_2/2$. Die Impedanz 29 mit dem Wert z3 bleibt erhalten, während die Impedanz 30 und die Spannungsquelle 31 des Bahnnetzes 16 ebenfalls aufgeteilt werden in die Impedanzen 36 und 41 (jeweils mit dem Wert $z_4/2$) bzw. Spannungsquellen 42 und 43. Die Erdung über den Mittelabgriff 23 des Transformators 19 wird in Fig. 6 durch den Widerstand 37 mit dem Wert $R_E$ repräsentiert. Ein entsprechender Widerstand 38 mit dem Wert $R_{E,r}$ beschreibt den gesamten Fern-Erdungswiderstand des Bahnnetzes 16.

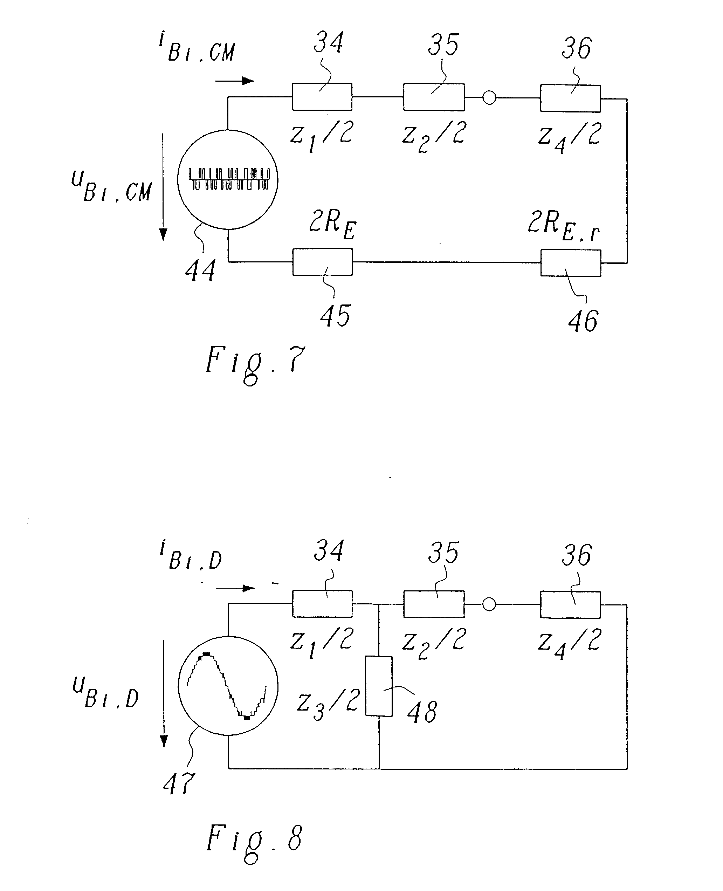

Nach dem Konzept der modalen Zerlegung ("Modal Decomposition") kann das Ersatzschaltbild der Fig. 6 in zwei überlagerte Teilsysteme zerlegt werden, nämlich in das Gleichtakt-System ("Common Mode System") und das Gegentakt-System ("Differential Mode System"). Die beiden überlagerten Systeme können dann getrennt voneinander behandelt und die resultierenden Ströme und Spannungen nach Beendigung der Analyse einfach addiert werden, um die realen physikalischen Grössen zu erhalten. Das Ersatzschaltbild im Gleichtakt-System für die obere Hälfte des VSC ist in Fig. 7 wiedergegeben. Neben den bereits bekannten Impedanzen 34, 35 und 36 befinden sich im Stromkreis die Widerstände 45 und 46, welche jeweils das Doppelte der Erdungswiderstände 37 bzw. 38 ausmachen. Die Spannungsquelle 44 gibt eine Spannung $u_{Bi,CM}$ ab, die einen Strom $i_{Bi,CM}$ durch den Kreis treibt. Das Ersatzschaltbild im Gegentakt-System für die obere Hälfte des VSC ist in Fig. 8 dargestellt. Neben den bereits bekannten Impedanzen 34, 35 und 36 ist hier zusätzlich die Impedanz 48 vorhanden, welche der halben Impedanz 29 entspricht und für die Filterschaltung 25 charakteristisch ist. Die Spannungsquelle 47 gibt eine Spannung $u_{Bi,D}$ ab, die einen Strom $i_{Bi,D}$ durch den Kreis treibt.

Für die Spannungen und Ströme ergibt sich der folgende Zusammenhang:

$$(2) \qquad U_{Bi,a} = u_{Bi,CM} + u_{Bi,D}$$

$$(3) \qquad u_{Bi,b} = U_{Bi,CM} - u_{Bi,D} \, ,$$

sowie

$$(4) \qquad i_{Bi} = i_{Bi,CM} + i_{Bi,D}$$

und

$$(5) \qquad i_E = 2 * i_{Bi,CM}.$$

Aus den Fig. 5 bis 8 und den Gleichungen (1) bis (5) ergibt sich unmittelbar, dass die Gleichtaktspannung $u_{Bi,CM}$ unerwünscht ist, weil sie einen Gleichtaktstrom $i_{Bi,CM}$ treibt, der nur durch die Erdungswiderstände 37 und 38 zurückfliessen kann. Die Höhe des Gleichtaktstromes $i_{Bi,CM}$ ist hauptsächlich durch die Impedanzen $z_1$ und $z_2$ des Transformators 19 begrenzt. Der Gleichtaktstrom $i_{Bi,CM}$ hat zwei nachteilige Wirkungen:

- Er bewirkt erhebliche Verluste sowohl im lokalen Erdungswiderstand 22 bzw. 37 als auch im Fern-Erdungswiderstand 38. Wie Simulationen einer realen Anlage (Leistung ca. 50 MW) zeigen, können die Verluste im Erdungswiderstand 22 (bei einem nominalen Widerstandswert von $R_E = 334 \, \Omega$) ungefähr 50kW betragen und sind daher von einer unakzeptablen Grössenordnung.

- Er kann in dem Bahnnetz (z.B. einem 138kV-Netz) Störungen in benachbarten Kommunikationseinrichtungen hervorrufen.

DARSTELLUNG DER ERFINDUNG

Es ist daher Aufgabe der Erfindung, einen VSC-Wechselrichter zu schaffen, bei welchem die über die Erdverbindung fliessenden Ströme unterdrückt bzw. auf einen unschädlichen Wert gedämpft werden.

Die Aufgabe wird bei einem Wechselrichter der eingangs genannten Art dadurch gelöst, dass zur Dämpfung bzw. Unterdrückung von über die Erdverbindung fliessenden gleichphasigen bzw. Gleichtakt-Störströmen innerhalb des Transformators die Sekundärwicklungen jeweils in eine erste und zweite gleichartige Teil-Sekundärwicklung aufgeteilt sind, und die Teil-Sekundärwicklungen so untereinander und mit dem Mittelabgriff verbunden sind, dass sich die in den Teil-Sekundärwicklungen induzierten Gleichtaktspannungen gegenseitig aufheben. Der besondere Vorteil der erfindungsgemässen Lösung besteht darin, dass Gleichtaktspannungskomponenten $u_{Bi,CM}$ bzw. Gleichtaktstromkomponenten vermieden werden, ohne dass die spektrale Qualität der Gegentaktspannung $u_{Bi,D}$ bzw. der Gegentaktströme in irgendeiner Weise beeinträchtigt wird.

Eine bevorzugte Ausführungsform der Erfindung zeichnet sich dadurch aus, dass die ersten Teil-Sekundärwicklungen eine erste Reihenschaltung bilden, dass die zweiten Teil-Sekundärwicklungen eine zur ersten Reihenschaltung parallele zweite Reihenschaltung bilden, dass der obere Ausgang der ersten Reihenschaltung den einen Ausgang des Wechselrichters bildet und der untere Ausgang der zweiten Reihenschaltung den anderen Ausgang des Wechselrichters bildet, und dass der untere Ausgang der ersten Reihenschaltung und der obere Ausgang der zweiten Reihenschaltung am Mittelabgriff zusammengeführt sind.

Bevorzugt wird ein Wechselrichter nach der Erfindung in einem Umrichter mit Gleichspannungszwischenkreis, insbesondere in einem Bahnstromumrichter oder einer Frequenz kupplung, eingesetzt.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1    den prinzipiellen Aufbau eines Bahnstromumrichters;

Fig. 2    das Blockschaltbild eines für den Bahnstromumrichter nach Fig. 1 geeigneten Wechselrichters mit einer Mehrzahl von parallelen Wechselrichterbrücken und mit Mittelpunktserdung des Transformators;

Fig. 3    beispielhafte pulsdauermodulierte Ausgangsimpulsfolgen der einzelnen Wechselrichterbrücken aus Fig. 2;

Fig. 4    die sich durch Aufsummierung der Ausgangsimpulsfolgen aus Fig. 3 ergebende Summenspannung;

Fig. 5    das Ersatzschaltbild des mit dem Bahnnetz verbundenen Wechselrichters aus Fig. 4 ohne Mittelpunktserdung des Transformators;

Fig. 6    das zu Fig. 5 entsprechende Ersatzschaltbild bei vorhandener Mittelpunktserdung;

Fig. 7    das aus dem Ersatzschaltbild der Fig. 6 abgeleitete Ersatzschaltbild für das Gleichtakt-Teilsystem;

Fig. 8    das aus dem Ersatzschaltbild der Fig. 6 abgeleitete Ersatzschaltbild für das Gegentakt-Teilsystem;

Fig. 9    ein bevorzugtes Ausführungsbeispiel für einen Wechselrichter nach der Erfindung mit einer Aufteilung der Sekundärwicklungen des Wechselrichter-Transformators in Teil-Sekundärwicklungen und einer speziellen Verschaltung der Teil-Sekundärwicklungen.

WEGE ZUR AUSFÜHRUNG DER ERFINDUNG

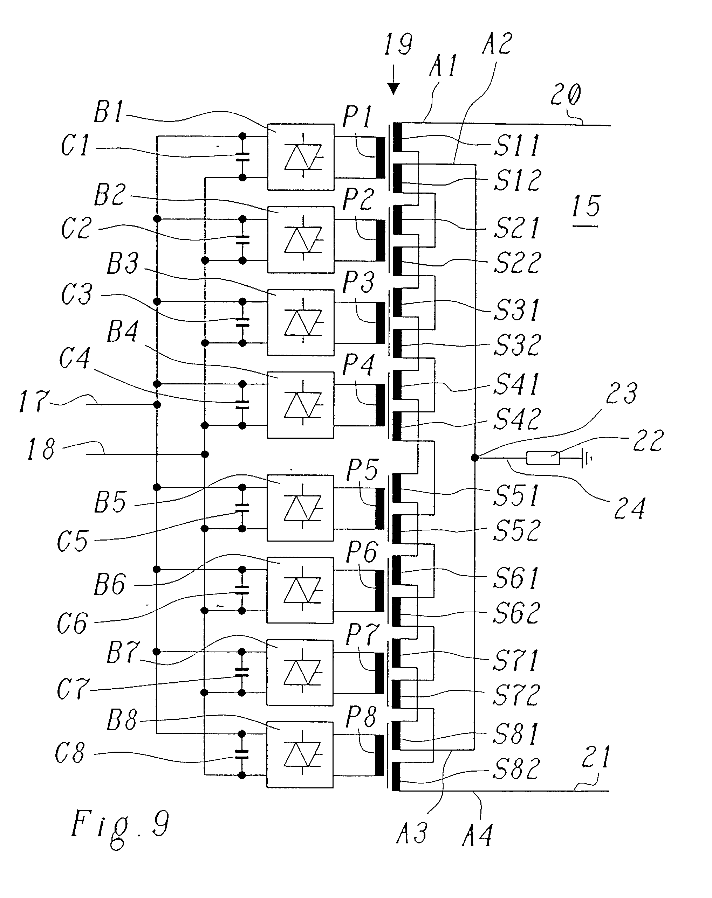

In der Fig. 9 ist ein bevorzugtes Ausführungsbeispiel für einen Wechselrichter nach der Erfindung wiedergegeben. Der Wechselrichter der Fig. 9 gleicht in seinem Aufbau im wesentlichen dem Wechselrichter der Fig. 2. Anstelle der einen Sekundärwicklung S1,.., S8 pro Wechselrichterbrücke werden hier die Sekundärwicklungen im Transformator 19 unterteilt in zwei gleichartige Teil-Sekundärwicklungen S11, S12;...; S81, S82. Die jeweils ersten (oberen) Teil-Sekundärwicklungen S11,..,S81 sind hintereinander in Reihe geschaltet und bilden eine erste Reihenschaltung mit den Ausgängen A1 (oben) und A3 (unten). Die jeweils zweiten (unteren) Teil-Sekundärwicklungen S12,..,S82 sind ebenfalls hintereinander in Reihe geschaltet und bilden parallel zur ersten Reihenschaltung eine zweite Reihenschaltung mit den Ausgängen A2 (oben) und A4 (unten).

Die durch die Erdverbindung 24 und den ggf. vorhandenen Erdungswiderstand 22 fliessenden Gleichtaktströme bzw. die dazugehörigen Gleichtaktspannungen werden nun dadurch ausgeschaltet, dass der obere Ausgang Al der ersten Reihenschaltung aus den Teil-Sekundärwicklungen S11,..,S81 den einen Ausgang des Wechselrichters 15 bildet und der untere Ausgang A4 der zweiten Reihenschaltung aus den Teil-Sekundärwicklungen S12,..,S82 den anderen Ausgang des Wechselrichters 15 bildet, und dass der untere Ausgang A3 der ersten Reihenschaltung und der obere Ausgang A2 der zweiten Reihenschaltung am Mittelabgriff 23 des Transformators 19 zusammengeführt sind.

Durch diese Art des Aufteilens und Zusammenschaltens der Sekundärwicklungen wird erreicht, dass

$$(6) \qquad u_{Bi,a} = -u_{Bi,b} = u_{Bi,D} = \frac{1}{2}u_{Bi}$$

und

$$(7) \qquad u_{Bi,CM} = 0$$

sind.

Da durch diese Art des Aufbaus des am Mittelabgriff geerdeten Transformators 19 die unerwünschten Gleichtaktspannungen praktisch vollständig beseitigt werden, ohne dass die Gegentaktspannungen negativ beeinflusst werden, wird gemäss der Erfindung durch eine vergleichsweise einfache Aenderung des Transformators ein maximaler Unterdrückungseffekt erzielt.

BEZEICHNUNGSLISTE

| | |
|---|---|
| 10 | Bahnstromumrichter |
| 11 | Drehstromnetz |
| 12 | Transformator (3-phasig) |
| 13 | Stromrichter |
| 14 | Gleichspannungszwischenkreis |
| 15 | Wechselrichter |
| 16 | Bahnnetz |

| | |
|---|---|
| 17,18 | Eingangsleitung (Wechselrichter) |
| 19 | Transformator (Wechselrichter) |
| 20,21 | Ausgangsleitung (Wechselrichter) |
| 22 | Widerstand |
| 23 | Mittelabgriff (Transformator) |
| 24 | Erdverbindung |
| 25 | Filterschaltung |
| 26,31 | Spannungsquelle |
| 27,..,30 | Impedanz |
| 32,33 | Spannungsquelle |
| 34,..,36 | Impedanz |
| 37,38 | Widerstand |
| 39,..,41 | Impedanz |
| 42,43 | Spannungsquellen |
| 44,47 | Spannungsquelle |
| 45,46 | Widerstand |
| 48 | Impedanz |
| A1,..,A4 | Ausgang |
| B1, .,B8 | Wechselrichterbrücke |
| C1,..,C8 | Kondensator |
| P1,..,P8 | Primärwicklung |
| S1,..,S8 | Sekundärwicklung |
| S11,..,S82 | Teil-Sekundärwicklung |
| T1,..,T8 | Tertiärwicklung |

**Patentansprüche**

1. Wechselrichter (15), umfassend eine Mehrzahl von aus der selben Gleichspannungsquelle parallel arbeitenden Wechselrichterbrücken (B1,..,B8), deren Ausgangsspannungen über einen Transformator (19) aufsummiert werden, welcher eine der Anzahl der Wechselrichterbrücken (B1,..,B8) entsprechende Anzahl von Primärwicklungen (P1,..,P8) und zugehörigen Sekundärwicklungen (S1,..,S8) aufweist, wobei jede Wechselrichterbrücke (B1,..,B8) jeweils ausgangsseitig an eine Primärwicklung (P1,..,P8) angeschlossen ist, und die Sekundärwicklungen (S1,..,S8) zur Summation der Ausgangsspannungen in Serie geschaltet sind, und wobei die Wechselrichterbrücken (B1,..,B8) jeweils nach Massgabe einer Hilfssteuerspannung pulsdauermoduliert angesteuert werden und die Hilfssteuerspannungen der einzelnen Wechselrichterbrücken (B1,..,B8) untereinander eine konstante Phasendifferenz aufweisen, und wobei der Transformator (19) einen Mittelabgriff (23) aufweist, welcher über eine Erdverbindung (24) geerdet ist, dadurch gekennzeichnet, dass zur Dämpfung bzw. Unterdrückung von über die Erdverbindung (24) fliessenden gleichphasigen bzw. Gleichtakt-Störströmen und den damit verbundenen Störspannungen innerhalb des Transformators (19) die Sekundärwicklungen (S1,..,S8) jeweils in eine erste und zweite gleichartige Teil-Sekundärwicklung (S11, S12 bzw. S21, S22 ....bzw. S81, S82) aufgeteilt sind, und die Teil-Sekundärwicklungen (S11,..,S82) so untereinander und mit dem Mittelabgriff (23) verbunden sind, dass sich die in den Teil-Sekundärwicklungen (S11,..,S82) induzierten Gleichtaktströme bzw. -spannungen gegenseitig aufheben.

2. Wechselrichter nach Anspruch 1, dadurch gekennzeichnet, dass die ersten Teil-Sekundärwicklungen (S11, S21,.., S81) eine erste Reihenschaltung bilden, dass die zweiten Teil-Sekundärwicklungen (S12, S22,..,S82) eine zur ersten Reihenschaltung parallele zweite Reihenschaltung bilden, dass der obere Ausgang (AI) der ersten Reihenschaltung (S11,..,S81) den einen Ausgang des Wechselrichters bildet und der untere Ausgang (A4) der zweiten Reihenschaltung (S12,..,S82) den anderen Ausgang des Wechselrichters bildet, und dass der untere Ausgang (A3) der ersten Reihenschaltung (S11,..,S81) und der obere Ausgang (A2) der zweiten Reihenschaltung (S12,..,S82) am Mittelabgriff (23) zusammengeführt sind.

3. Anwendung eines Wechselrichters nach einem der Ansprüche 1 und 2 in einem Umrichter (10) mit Gleichspannungszwischenkreis (14).

EP 0 898 359 A2

Fig. 1

Fig. 2

B1
B2
B3
B4
B5
B6
B7
B8

Fig. 3

$u_{Bi}$

Fig. 4

Fig. 5

Fig. 6

Fig. 7

Fig. 8

Fig. 9